# EUROPÄISCHE PATENTANMELDUNG

(11) **EP 1 477 746 A1**
(43) Veröffentlichungstag der Anmeldung: **17.11.2004**
(21) Anmeldenummer: 03022118.8
(22) Anmeldetag: 29.09.2003
(51) Int. Cl.: F24J 2/52

(54) **Arbeitsbühne zur Montage von Sonnenkollektormodulen**

(30) Priorität: 02.10.2002 DE 10246161
(71) Anmelder: Firma Beck Energie GmbH, 97332 Volkach-Dimbach (DE)
(72) Erfinder: Bernhard Beck, 97332 Volkach-Dimbach (DE); Thomas Neussner, 97509 Zeilitzheim (DE)
(74) Vertreter: Dassler, Frank A.

(57) **Zusammenfassung**

Eine längsverfahrbare, schienengebundene Arbeitsbühne ist zur Montage von Sonnenkollektormodulen vorgesehen. Die Bühne weist mindestens drei, auf unterschiedlichem Niveau liegende Standbereiche auf. An der bezogen auf die Montagerichtung rückwärtigen Stirnseite ist die Bühne mit zwei Aussparungen versehen, von denen je eine zumindest teilweise zwischen zwei Standbereichen liegt.
Die Erfindung geht dabei von der Erkenntnis aus, dass es sinnvoll ist, das ohnehin vorhandene Stützen/Schienengerüst auf welches die Sonnenmodule zu montieren sind, für die Montage selbst aktiv einzusetzen. Dabei ergibt sich neben der vereinfachten Montage mit Effzienzgewinn auch noch ein erhöhter Montagekomfort, der sich zum einen in reduzierter körperlicher Anstrengung niederschlägt, als auch auf dem Umstand beruht, dass komplett von der Arbeitsbühne aus montiert werden kann. Behinderungen durch unebene Bodenverhältnisse, Regenpfützen, verschlammten Boden und dergleichen treten nicht mehr auf.

## Beschreibung

Die Erfindung bezieht sich auf eine längsverfahrbare, schienengebundene Arbeitsbühne zur Montage von Modulen zur Aufnahme von Sonnenenergie.

Sonnenenergieanlagen können Ausmaße annehmen, bei denen Felder von mehreren hundert Metern Kantenlänge zu erstellen sind. Die einzelnen Module erreichen, wenn sie z.B. mit PV (photovoltaik) - Zellen bestückt sind, ein Gewicht von ca. 20 kg. Die Montage mehrerer tausend Module dieser Art erfordert ohne besondere Hilfsmittel eine erhebliche körperliche Anstrengung.

Die einzelnen Module sind schräg gestellt, um einen effizienten Einfallswinkel der Sonnenenergie zu erzielen. Diese Schrägstellung erreicht man üblicherweise durch ein Gerüst, bei dem zwei Reihen unterschiedlich hoher Stützen parallel zueinander in den Boden eingerammt und fixiert werden. An ihrem oberen Ende sind die Stützen mit Aufnahmen für Schienen versehen, die im korrekt montierten Zustand dann ebenfalls parallel zueinander auf unterschiedlichem Höhenniveau verlaufen.

Der Erfindung liegt die Aufgabe zugrunde, ein Hilfsmittel bereitzustellen, mit dem Module zur Aufnahme der Sonnenenergie auf ein vorhandenes Gerüst effektiv zu montieren sind.

Diese Aufgabe wird erfindungsgemäß dadurch gelöst, dass die Arbeitsbühne mindestens drei, auf unterschiedlichem Niveau liegende Standbereiche aufweist und dass an der, bezogen auf die Montagerichtung rückwärtigen Stirnseite der Bühne, zwei Aussparungen eingearbeitet sind, von denen je eine, zumindest teilweise, zwischen zwei Standbereichen liegt.

Die Erfindung geht dabei von der Erkenntnis aus, dass es sinnvoll ist, ohnehin vorhandene Stützen/Schienengerüst, auf welches die Sonnenmodule zu montieren sind, für die Montage selbst aktiv einzusetzen. Dabei ergibt sich neben der vereinfachten Montage mit Effizienzgewinn auch noch ein erhöhter Montagekomfort, der sich zum einen in reduzierter körperlicher Anstrengung niederschlägt, als auch auf dem Umstand beruht, dass komplett von der Arbeitsbühne aus montiert werden kann. Behinderungen durch unebene Bodenverhältnisse, Regenpfützen, verschlammten Boden und dergleichen treten nicht mehr auf.

Die drei auf unterschiedlichem Höhenniveau liegenden Arbeits- und Standbereiche ermöglichen es den Monteuren, sowohl die unten liegenden Module als auch die mittleren, sowie die oben liegenden in aufrechter Arbeitshaltung zu montieren. Die beiden Aus-sparungen geben den Raum um die Schiene(n) herum frei, auf denen quer verlaufende Modulträger zu befestigen sind.

Es hat sich als vorteilhaft herausgestellt, die Arbeitsbühne mit fünf Standbereichen zu versehen und die erste Aussparung dann zwischen dem ersten und zweiten Standbereich zu plazieren und die zweite Aussparung zwischen dem vierten und fünften Standbereich. Bei Großanlagen können die Schienen mehrere Meter auseinander liegen, und es kommen dann quer liegende Modulträger von 5 bis 8 Meter Länge zum Einsatz. Eine feinere Abstimmung der jeweiligen Arbeitshöhen trägt den physiologischen Gegebenheiten Rechnung.

Um die Verschiebbarkeit der Arbeitsbühne zu erreichen, sind an ihrer Unterseite Mittel zur Längsverfahrbarkeit angeordnet, die z.B. Rollen, Gleitlager oder Luftkissen umfassen können. Ein elektrischer Antrieb wird zweckmäßiger Weise vorgesehen.

Eine weitere vorteilhafte Ausführungsform sieht vor, im vorderen Bereich der Arbeitsbühne, also im stirnseitigen Bereich, der den Aussparungen an der hinteren Stirnseite gegenüberliegt, eine Ablagefläche für mindestens zwei Paletten vorzusehen. Die Paletten, die einzeln ein Gewicht von ca. 350 kg bis 400 kg erreichen können, sind dabei auf einem Gleitfeld abzusetzen, das mit Mitteln bestückt ist, die Paletten zu verschieben. Die Mittel können z.B. elektrisch angetriebene Rollenkörper sein.

Zur Terminologie ist anzumerken, dass, da die Arbeitsbühne im wesentlichen eine rechteckige Grundform aufweist, in Montagerichtung gesehen die Frontseite als vordere Stirnseite bezeichnet ist und die gegenüberliegende Seite als rückwärtige Stirnseite. Entsprechend ergeben sich eine obere Längsseite und eine untere Längsseite.

Wie es bereits in der Einleitung ausgeführt wurde, kann ein einzelnes Modul von Sonnenkollektoren bis zu 20 kg oder mehr wiegen. Bei Tausenden von Modulen kommen so viele Tonnen zusammen, die die Kondition der Monteure überfordern könnte. Es ist daher vorgesehen, die Arbeitsbühne mit einem in x,y,z-Richtung frei beweglichen Schwenkarm auszurüsten, an dessen Ende eine Greifvorrichtung (z.B. ein Ansaugfuß) für die Module montiert ist. Der Schwenkarm kann dabei Kugelgelenke, Kardangelenke, ausfahrbare Teleskopkonstruktionen oder ähnliches aufweisen, wie es prinzipiell auf anderen Fachgebieten bekannt ist.

Eine praktische Ausführungsform der Schienen sieht vor, diese als Leimbinderkonstruktion vorzusehen. Zum Schutz gegen Witterungseinflüsse sind die Leimbinder mit einer Schutzummantelung, z.B. mit Teerpappe umgeben. Ein rationelles Montageverfahren sieht vor, den Leimbinder an den Stellen vorzubohren, an denen später die Modulträger befestigt werden. Diese sind z.B. als Aluminiumträger mit Bohrungen ausgeführt, die mit denen im Leimbinder fluchten sollen. Da es mühsam ist, durch die Teerpappe hindurch die Löcher im Leimbinder zu verifizieren, ist die Arbeitsbühne mit einem Abstandssensor ausgerüstet, der die Arbeitsbühne in einem vorgebbaren Abstand verfährt. Der Abstandssensor ist z.B. ein Anschlagsensor, der an der Arbeitsbühne derart befestigt ist, dass er an einem bereits befestigten Modulträger anliegen kann. Da die Modulträger praktischerweise paarweise montiert werden, sollte der Abstandssensor am vorletzten Modulträgerpaar anliegen. Nach erfolgter Montage des letzten Modulträgerpaares, wird die Arbeitsbühne auf Kommando so weit vorgeschoben, dass der Abstandssensor vom vorletzten Modulträger zum letzten Modulträger wandert. Ob der Sensor zur Anlage kommt oder in Eingriff mit den Modulträgern steht, ist unerheblich. Eine Variante zur mechanischen Abstandserfassung ist ein Schrittmotor, der die Bühne bei Bedarf um eine definierte Wegstrecke verschiebt.

Die zuvor beschriebene Maßnahme sichert den korrekten Abstand der Modulträger in Montagerichtung entsprechend der Verfahrrichtung der Arbeitsbühne. Eine exakt gleiche Lage in Querrichtung wird durch an beiden Seiten schwenk- oder drehbar angebrachte Montageträger erreicht, die zur Aufnahme der Modulträger aus Aluminium-Profil ausgebildet sind. Da die Arbeitsbühne eine oben liegende und eine unten liegende Seitenwand hat, befinden sich auch die Montageträger auf verschiedenen Höhen. Der untere Montageträger besitzt zwei Zapfen zur seitlichen Führung und einen Zapfen als Anschlag und der obere nur zwei Zapfen zur seitlichen Führung. Bei der Montage sind die Montageträger ausgeschwenkt und zur Aufnahme der Modulträger bereit.

Die Monteure legen einen Modulträger auf, welcher durch die Schwerkraft bedingt bis zum Anschlagzapfen des unteren Montageträgers rutscht. Im Ergebnis ist der Modulträger in alle Richtungen fixiert: In der Montagerichtung (X-Richtung) durch den definierten Vorschub mittels des Abstandssensors und den seitlichen Zapfen, in der Querrichtung (Y-Richtung) durch den Anschlagzapfen und in der Senkrechten (Z-Richtung) durch seine Auflage auf den Leimbindem. Da auch die Bohrungen im Modulträger mit den Sackbohrungen im Leimbinder fluchten, kann sofort ohne weiteren Aufwand die Fixierung des Modulträgers erfolgen. ,

Eine weitere Rationalisierungsmaßnahme besteht darin, den Montageträger zur gleichzeitigen Aufnahme von zwei beabstandeten Modulträgern auszubilden. Die Modulträger werden dann immer gleich paarweise mit ihrem auf die Breite der Kollektormodule zugeschnittenen Abstand zueinander montiert.

Bei sehr großen Anlagen, bei denen die Länge, über die die Arbeitsbühne eingesetzt wird, z.B. 1000 m beträgt, kann es vorteilhaft sein, die Arbeitsbühne gleichzeitig als Justierhilfe bei der Erstellung des Traggerüsts einzusetzen. Dazu werden die Stützen erst einmal grob in einem Abstand von ca. 6 m in,den Boden gerammt, wobei um die Stützen herum eine Ausgrabung zum späteren Verfüllen mit Beton vorzusehen ist. Die Stützen sind z.B. aus galvanisiertem Stahl im Doppel-T Profil erstellt. In der Mittelfläche der Stützen können auf unterschiedlicher Höhe je eine Bohrung angebracht sein, die ein Laserstrahl bei korrekter Ausrichtung ungehindert durchlaufen kann. An ihrer vorderen Stirnseite weist die Arbeitsbühne eine Justiervorrichtung z.B. in Form einer im Querschnitt trichterförmigen Führungsstelle auf. Kommt die Arbeitsbühne zu einer lose eingerammten Stütze, wird diese automatisch in Seitenrichtung (Y-Richtung) gerade gezogen. Die Stütze wird dann in der Führungshilfe so zentriert, dass auch die X-Koordinate stimmt. Weiteres Einrammen bis zu einer Tiefe, bei der der Laserstrahl die Stütze passiert, bringt sie in ihre Endlage, in der sie dauerhaft im Fundament zu vergießen ist.

Entsprechend den beschriebenen Ausgestaltungen der Arbeitsbühne sieht die Erfindung noch ein Betriebsverfahren zur Montage von Modulen zur Aufnahme von Sonnenenergie auf einem Gerüst mit zwei beabstandeten, auf unterschiedlicher Höhe montierter Schienen vor, dass sich dadurch auszeichnet, dass
- ein erster Modulträger in den Montageträger eingelegt wird,
- der Montageträger abgesenkt wird, bis der erste Modulträger auf den Schienen aufliegt,
- der erste Modulträger auf den Schienen befestigt wird,
- die Arbeitsbühne um einen definierten Abstand verschoben wird,
- ein zweiter Modulträger in den Montageträger eingelegt wird,
- der Montageträger abgesenkt wird, bis der zweite Modulträger auf den Schienen aufliegt,
- der zweite Modulträger auf den Schienen befestigt wird,
- das so montierte Modulträgerpaar mit Modulen bestückt wird, und
- die Arbeitsbühne mit Hilfe des Abstandssensors auf das nächste Rastermaß für das nächste Modulträgerpaar verschoben wird.

Dabei kann es zweckmässig sein, dass die Arbeitsbühne zunächst über das Rastermaß hinaus und dann zurück auf das genaue Rastermaß verschoben wird. Dies ermöglicht es auf einfache Weise, mit einem mechanischen Anschlag, in der einfachsten Form ein Abstandsholz, als Abstandssensor auszukommen.

Die Erfindung wird anhand der folgenden Zeichnungen näher erläutert. Alle Zeichnungen sind nicht maßstabsgerecht und enthalten einzelne Bauteile, die zur besseren Übersichtlichkeit übergroß dargestellt sind. Es zeigen:
- Figur 1: Eine Aufsicht und einen Querschnitt auf bzw. von einer Stützkonstruktion, wie sie für Solaranlagen typisch ist,
- Figur 2: einen Querschnitt durch eine Stützkonstruktion gemäß Anspruch 1 mit aufgesetzter Arbeitsbühne,
- Figur 3: eine Aufsicht auf eine Arbeitsbühne zur Verwendung mit einer Stützkonstruktion nach Figur 1, und
- Figur 4: einen schematischen Querschnitt durch eine Arbeitsbühne mit 5 unterschiedlich hohen Standniveaus.

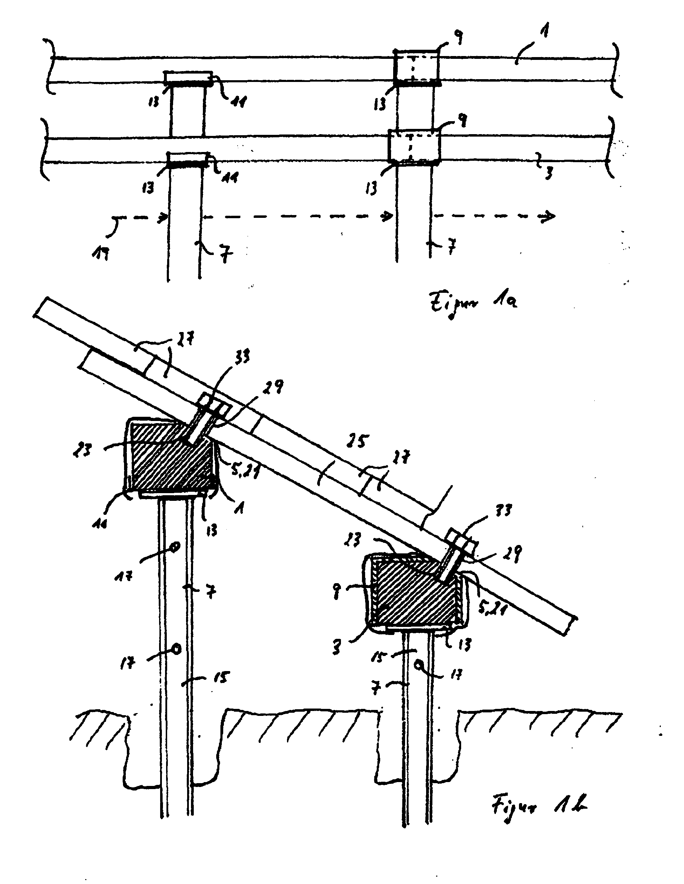

In Figur 1 sind zwei Schienen 1,3 dargestellt, die jeweils mit einer abgefassten Kante 5 versehen sind und auf unterschiedlicher Höhe verlaufen. Die Schienen sind auf Stützen 7 befestigt, die entsprechend dem unterschiedlichen Höhenverlauf der Schienen 1,3 unterschiedliche Längen aufweisen. Zur Montage der Stützen 7 wird zunächst ein Erdloch von ca. 80 cm Tiefe ausgehoben und die Stütze 7 wird in den Boden des Erdlochs ca. 50 cm tief eingerammt. Diese Tiefe erlaubt noch eine gewisse Ausrichtung der Stützen 7, wie sie später in Verbindung mit dem Gebrauch der Arbeitsbühne beschrieben ist.

In Figur 1a sind zwei nebeneinander liegende Stützen 1,3 dargestellt, die ca. 6 m auseinander liegen. Die Gesamtlänge einer einzelnen Schiene beträgt z.B. 200 m. Für die Schienen 1,3 wird als Baumaterial vorzugsweise Leimbinder verwendet, der z.B. in Längen von 12 m geliefert wird. Zur Herstellung eines kontinuierlichen Verlaufs der Schienen 1,3 wird jede zweite Stütze 7 mit einem umschließenden Balkenschuh 9 versehen und die dazwischen liegende Stütze 7 mit einem umschließenden Balkenschuh 11. Der Stoß von zwei aneinander grenzenden Leimbindem verbindet sich ca. in der Mitte des umschließenden Balkenschuhs 9. Die Balkenschuhe 9, 11 selber können auf einer Montageplatte 13 montiert sein, die vor dem Einrammen auf die Oberseite der Stütze 7 geschweißt ist. Die Stütze 7 ist als Doppel-T Stahlträger ausgeführt und an ihrer breiten Fläche 15 m mit einem oder mehreren Durchbrüchen 17 versehen. Der Durchbruch 17, z.B. eine einfache Bohrung, dient dazu, einen Laserstrahl 19 passieren zu lassen, wenn die Stütze korrekt ausgerichtet ist. Bei nicht fluchtender Ausrichtung ist der Laserstrahl 19 auf dem Doppel-T Stahlträger sichtbar und dieser kann entsprechend justiert werden, bis der Laserstrahl 19 den Durchbruch 17 durchläuft.

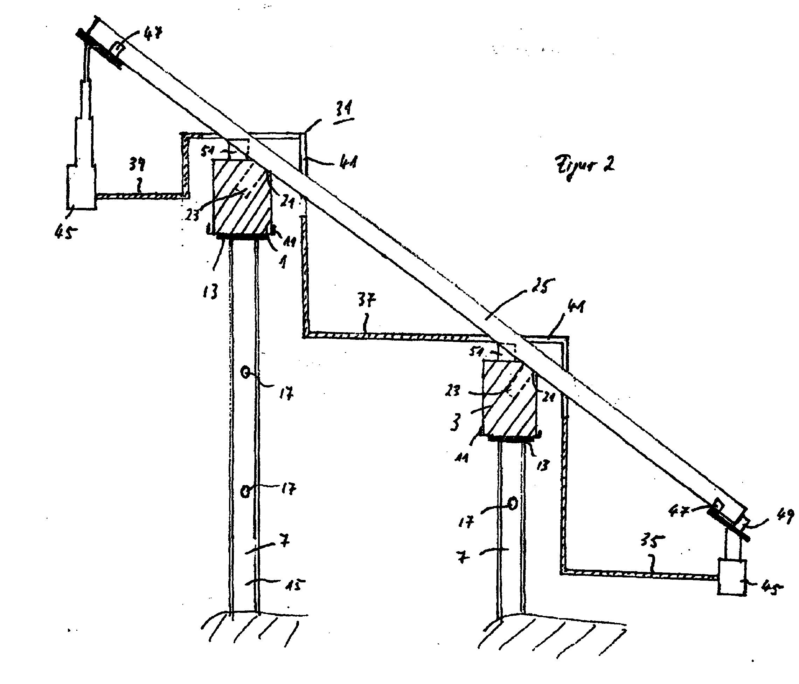

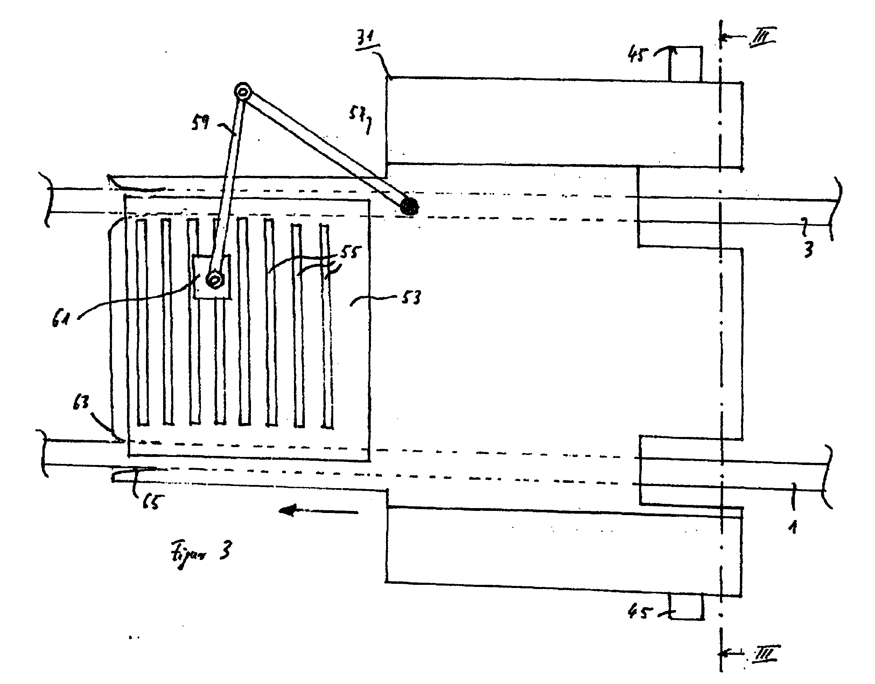

An der Fläche 21, die von der abgefassten Seite der Schienen 1,3 gebildet wird, ist eine Sackbohrung 23 vorgesehen, die dazu dient, einen Modulträger 25 zu befestigen, auf den Module 27 zur Aufnahme von Sonnenenergie montiert werden. Der Modulträger 25 ist z.B. ein Aluminiumprofil mit rechteckigem Querschnitt, das derart vorgefertigt ist, dass es unmittelbar auf den Schienen 1,3 verschraubt werden kann. Dazu ist es mit zwei oder mehreren Bohrungen 29 versehen, die in fluchtende Relation mit dem Sackloch 23 zu bringen sind, wie es eine weiterführende Ausgestaltung der anhand der Figuren 2 und 3 dargestellten Arbeitsbühne 31 ermöglicht. Ist der Modulträger 25 korrekt ausgerichtet, wird er mittels geeigneter Befestigungsmittel, wie beispielsweise einer Schraube 33 mit den Schienen 1,3 verschraubt.

Die Figuren 2 und 3 zeigen die Stützkonstruktion nach Abbildung 1 mit auf den Schienen 1, 3 aufgesetzter Arbeitsbühne 31. Die Arbeitsbühne 31 ist mit einer ersten, unteren Standfläche 35, mit einer zweiten, mittleren Standfläche 37 und mit einer dritten, oberen Standfläche 39 versehen. Zwischen den Arbeits- und Standflächen 35, 37, 39 sind, zum Teil überschneidend, zwei Aussparungen 41 vorhanden. Die Breite und Tiefe der Aussparungen 41 ist so gewählt, dass der Modulträger 25 am hinteren Ende 43 der Arbeitsbühne 31 ohne an diese anzustoßen auf die Schienen 1, 3 abgelegt werden kann. Zur genau plazierten Ablage dienen zwei Montageträger 45, von denen der untere zwei seitliche Führungszapfen 47 und einen Anschlagzapfen 49 und der obere Montageträger nur zwei Führungszapfen 47 aufweist. Im gezeigten Ausführungsbeispiel sind die Montageträger als hydraulische Stempel realisiert, in welche im ausgefahrenen Zustand ein Modulträger 25 hineingelegt wird und der eingefahren wird, bis der Modulträger 25 zur Auflage auf die Schienen 1,3 kommt. Das Ein- oder Zurückfahren der Hydraulik wird dann vorgenommen, wenn die Arbeitsbühne 31 ihre definierte longitudinale Position eingenommen hat, wie es später noch beschrieben ist.

Die Arbeitsbühne 31 weist an ihrer unteren Seite zwei im Abstand der Stützen 7 voneinander beabstandete Rollensätze 51 auf, die zum Verschieben der Bühne auf den Schienen 1,3 entlang der Montagerichtung, die durch den Pfeil 52 angedeutet ist, dienen. Selbstverständlich ist die Arbeitsbühne 31 auch in der Gegenrichtung verschiebbar, wenn ihr Antrieb (nicht gezeigt) umgeschaltet wird.

Wie es am besten aus der Figur 3 ersichtlich ist, befindet sich im vorderen Teil der Arbeitsbühne 31 eine Plattform 53, die mit einem Satz Walzen 55 versehen ist. Dabei weist die Arbeitsbühne 31 seitliche Verjüngungen 57 auf, die das Rangieren eines Gabelstaplers oder ähnlichen Gerätes an den vorderen Bereich der Arbeitsbühne heran vereinfachen. Die Plattform 53 dient der Bevorratung, indem sie für das Absetzen von Paletten geeignet ist, die dann mittels der Walzen 55, von denen zumindest eine antreibbar ist, bewegt werden können.

Zur einfachen Handhabung der Module 27 ist an der Arbeitsbühne 31 ein Schwenkarm 59 vorgesehen, der an seinem Ende eine Greifvorrichtung 61 aufweist. Der Schwenkarm 59 ist in alle Richtungen frei beweglich, was z.B. durch den Einsatz von einem Kugellager in Verbindung mit einem Teleskoparm oder einem mehrteiligen Arm mit Gelenken erzielt werden kann. Als Greifvorrichtung 61 kommen ebenfalls auf dem Markt erhältliche Produkte in Frage, wobei sich ein Saugarm aufgrund der glatten Oberfläche der Module 27 anbietet.

Die Verfahrbarkeit der Arbeitsbühne 31 erfolgt in festen, vorgebbaren Abständen mittels eines Abstandssensors (nicht gezeigt) oder eines Schrittmotors. Techniken dieser Art sind allgemein bekannt und sollten hier nicht näher erläutert werden. Wichtig ist, dass immer der letzte fertig montierte Modulträger 27 als Ausgangsbasis für die neue Verschiebung genommen wird, damit sich etwaige minimale Abweichungen nicht addieren.

So sieht auch ein Betriebsverfahren zur Montage der Module 27 vor, dass zunächst ein erster Modulträger 25 in den Montageträger 45 eingelegt wird, dann der Montageträger 45 abgesenkt wird, bis der erste Modulträger 45 auf den Schienen 1,3 aufliegt und anschließend der erste Modulträger 25 auf den Schienen 1,3 befestigt wird. Dann wird die Arbeitsbühne 31 um einen definierten Abstand verschoben und es wird ein zweiter Modulträger 25 in den Montageträger eingelegt und nach dem Absenken verschraubt.

Der hier in Frage kommende Abstand ist derjenige, der zwischen einem zugeordneten Paar von Modulträgern 25 vorliegt und der entsprechend der Breite der ausgewählten Module 27 zu wählen ist. Dieser Abstand ist nicht notwendigerweise identisch mit dem hier als Rastermaß bezeichneten Abstand, um den die Arbeitsbühne 31 wiederum mit Hilfe des Abstandssensors für die Montage des nächsten Modulträgerpaares verschoben wird. Je nach gewähltem Abstandssensor kann es zweckmäßig sein, die Arbeitsbühne 31 zunächst über das Rastermaß hinaus zu verschieben, um sie dann auf das genaue Rastermaß zurück zu verschieben.

Bei einer entsprechenden Tiefe der Aussparung 41 ist es möglich, zwei Montageträger 45 nebeneinander vorzusehen, deren Abstand dem zuvor beschriebenen definierten Abstand zwischen zwei Modulträgern 25 eines Paares entspricht. Diese Maßnahme erfordert nur eine einzige Verschiebung der Arbeitsbühne 31, nämlich die im Rastermaß, pro Modulreihe.

Eine weiterführende Ausgestaltung der Arbeitsbühne 31 macht diese auch geeignet, die Stützkonstruktion auszurichten. Wie eingangs erwähnt, können die Stützen 7 erst provisorisch in den Boden gerammt werden, ohne in ihre letztlich erforderliche Position ausgerichtet zu sein. Diese Ausrichtung wird anhand einer Justiervorrichtung 63 vorgenommen, die im einfachsten Fall durch einen trichterförmigen Einschnitt 65 am vorderen Ende der Plattform 53 realisiert ist. Es sind Varianten möglich, dass eine der Schienen, z.B. die niedrigere Schiene 3 fest ausgerichtet montiert ist, und nur die höheren Stützen 7, die die Schiene 1 tragen, mittels des trichterförmigen Einschnitts 65 parallel gezogen werden. Es können aber auch zwei Einschnitte 65 vorgesehen sein, um beide Schienen 1,3 gleichzeitig zu justieren.

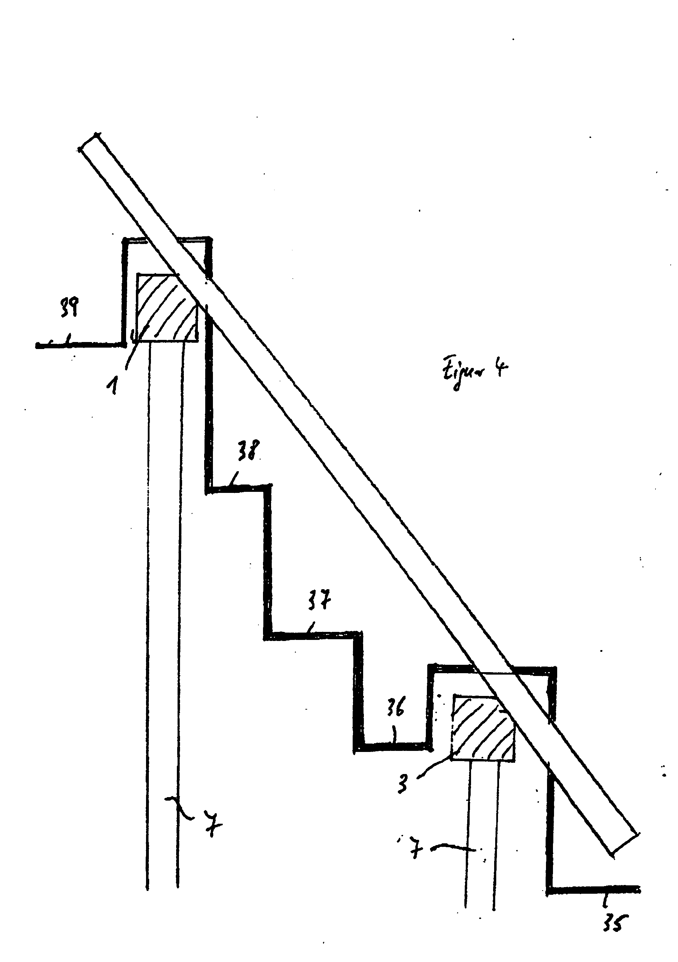

In Figur 4 ist noch eine Arbeitsbühne mit fünf unterschiedlich hohen Standflächen 35-39 schematisch gezeigt. Eine solche Ausführung ist zweckmäßig, wenn die Breite des Kollektorstreifens, entsprechend einem langen Modulträger, so groß ist, dass der Monteur nicht alle Module 25 von den drei Standflächen 35,37,39 aus erreichen kann. Je nach Bedarf ist auch eine Ausführung mit vier oder mehr als fünf Standflächen möglich.

## Patentansprüche

1. Längsverfahrbare, schienengebundene Arbeitsbühne (31) zur Montage von Modulen (25) zur Aufnahme von Sonnenenergie **dadurch gekennzeichnet, dass** mindestens drei auf unterschiedlichem Niveau liegende Standbereiche (35,37,39) vorgesehen sind und dass an der bezogen auf die Montagerichtung (52) gesehen rückwärtigen Stirnseite (43) der Bühne zwei Aussparungen (41) eingearbeitet sind, von denen je eine zumindest teilweise zwischen zwei Standbereichen (35,37; 37,39) liegt.

2. Arbeitsbühne nach Anspruch 1, **dadurch gekennzeichnet, dass** fünf Standbereiche (35-39) vorliegen und die erste Aussparung zwischen dem ersten und zweiten Standbereich liegt und die zweite Aussparung zwischen dem vierten und fünften Standbereich liegt.

3. Arbeitsbühne nach einem der Ansprüche 1 oder 2, **dadurch gekennzeichnet, dass** an ihrer Unterseite Mittel zur Längsverfahrbarkeit angeordnet sind.

4. Arbeitsbühne nach Anspruch 3, **dadurch gekennzeichnet, dass** die Mittel (51) zur Längsverfahrbarkeit entweder Rollen, Gleitlager oder Luftkissen umfassen.

5. Arbeitsbühne nach einem der Ansprüche 1 bis 4, **dadurch gekennzeichnet, dass** in ihrem vorderen Bereich eine Ablagefläche (53), für mindestens zwei Paletten vorgesehen ist

6. Arbeitsbühne nach Anspruch 5, **dadurch gekennzeichnet, dass** die Ablagefläche (53) mit Gleitmitteln, wie z.B. einem Walzenfeld (55), versehen ist, auf dem die Paletten verschiebbar sind.

7. Arbeitsbühne nach einem der Ansprüche 1 bis 6, **dadurch gekennzeichnet, dass** ihre Länge zwischen 3 und 10 Metern beträgt, vorzugsweise zwischen 5 und 8 Metern.

8. Arbeitsbühne nach einem der Ansprüche 1 bis 7, **dadurch gekennzeichnet, dass** an ihrer vorderen Stirnseite eine Justiervorrichtung (63) vorgesehen ist, die die Schiene(n) (1,3), auf die sich die Bühne (31) bewegt, selbsttätig ausrichtet.

9. Arbeitsbühne nach Anspruch 8, **dadurch gekennzeichnet, dass** die Justiervorrichtung (63) ein trichterförmiger Einschnitt (65) ist.

10. Arbeitsbühne nach einem der Ansprüche 1 bis 9, **dadurch gekennzeichnet, dass** ein in X,Y,Z-Richtung frei beweglicher Schwenkarm (59) vorgesehen ist, an dessen Ende eine Greifvorrichtung (61) für die Module (27) montiert ist.

11. Arbeitsbühne nach Anspruch 10, **dadurch gekennzeichnet, dass** die Greifvorrichtung (61) ein Ansaugfuß ist.

12. Arbeitsbühne nach einem der Ansprüche 1 bis 11, **dadurch gekennzeichnet, dass** ein Abstandssensor vorgesehen ist, der die Arbeitsbühne (31) in einem vorgebbaren Abstand verfährt.

13. Arbeitsbühne nach Anspruch 12, **dadurch gekennzeichnet, dass** der Abstandssensor ein Anschlagsensor ist, der geeignet ist, am befestigten Montagegut anzuliegen.

14. Arbeitsbühne nach Anspruch 12, **dadurch gekennzeichnet, dass** der Abstandssensor einen Schrittmotor bedient oder umfaßt.

15. Arbeitsbühne nach einem der Ansprüche 1 bis 14, **dadurch gekennzeichnet, dass** an beiden Seiten schwenk-, verschieb- oder drehbare Montageträger (45) angebracht sind, die zur Aufnahme von balkenförmigen Modulträgem (25) ausgebildet sind.

16. Arbeitsbühne nach Anspruch 15, **dadurch gekennzeichnet, dass** die Montageträger (45) höhenversetzt sind und der untere zwei Zapfen zur seitlichen Führung (47) und einen Zapfen (49) als Anschlag und der obere zwei Zapfen (47) zur seitlichen Führung der Modulträger (25) umfasst.

17. Arbeitsbühne nach Anspruch 15 oder 16, **dadurch gekennzeichnet, dass** der Montageträger (45) zur gleichzeitigen Aufnahme von zwei beabstandeten Modulträgern (25) ausgebildet ist.

18. Betriebsverfahren zur Montage von Modulen zur Aufnahme von Sonnenenergie auf einem Gerüst mit zwei beabstandeten, auf unterschiedlicher Höhe montierten Schienen unter Verwendung der Arbeitsbühne nach einem der Ansprüche 1 bis 17, **dadurch gekennzeichnet, dass**
• ein erster Modulträger in den Montageträger eingelegt wird,
• der Montageträger abgesenkt wird, bis der erste Modulträger auf den Schienen aufliegt,
• der erste Modulträger auf den Schienen befestigt wird,
• die Arbeitsbühne um einen definierten Abstand verschoben wird,
• ein zweiter Modulträger in den Montageträger eingelegt wird,
• der Montageträger abgesenkt wird, bis der zweite Modulträger auf den Schienen aufliegt,
• der zweite Modulträger mit den Schienen verschraubt wird,
• das so montierte Modulträgerpaar mit Modulen bestückt wird, und
• die Arbeitsbühne mit Hilfe des Abstandssensors auf das nächste Rastermaß für das nächste Modulträgerpaar verschoben wird.

19. Betriebsverfahren nach Anspruch 18, **dadurch gekennzeichnet, dass** die Arbeitsbühne zunächst über das Rastermaß hinaus und dann zurück auf das genaue Rastermaß verschoben wird.

20. Betriebsverfahren nach Anspruch 18 oder 19, **dadurch gekennzeichnet, dass** die Schienen provisorisch auf Stützen fixiert sind und erst nach Einwirkung der Justiervorrichtung auf die Schienen die Stützen in ihrer endgültigen Lage dauerhaft befestigt werden.
